Europäisches Patentamt

European Patent Office

Office européen des brevets

(11) Veröffentlichungsnummer: **0 403 677 B1**

# EUROPÄISCHE PATENTSCHRIFT

(45) Veröffentlichungstag der Patentschrift: **14.04.93**

(21) Anmeldenummer: **89111343.3**

(22) Anmeldetag: **22.06.89**

(51) Int. Cl.⁵: **G01L 25/00**

(54) **Kraftnormal-Messeinrichtung mit hydraulischer Kraftübersetzung.**

(43) Veröffentlichungstag der Anmeldung:
**27.12.90 Patentblatt 90/52**

(45) Bekanntmachung des Hinweises auf die
Patenterteilung:
**14.04.93 Patentblatt 93/15**

(84) Benannte Vertragsstaaten:
**BE CH DE ES FR GB IT LI NL SE**

(56) Entgegenhaltungen:
**WO-A-88/08966**
**DE-A- 2 952 024**

(73) Patentinhaber: **A. M. ERICHSEN GMBH**
**Simonshöfchen 31**
**W-5600 Wuppertal 11(DE)**

(72) Erfinder: **Havemann, Thea, Dipl.-Ing.**
**Briller Höhe 6**
**W-5600 Wuppertal(DE)**

(74) Vertreter: **Peerbooms, Rudolf, Dipl.-Phys.**
**Postfach 200 208 Dickmannstrasse 45c**
**W-5600 Wuppertal 2 (DE)**

Rank Xerox (UK) Business Services
(3. 10/3.5x/3.0. 1)

**Beschreibung**

Die Erfindung betrifft eine Belastungseinrichtung mit hydraulischer Kraftübersetzung, bei welcher jeweils ein in einem Arbeitszylinder aufgenommener Arbeitskolben an einer Stirnseite vom Ausgangsdruck einer hydraulischen Meßseite beaufschlagt wird, die einen durch abgestufte Belastungsgewichte belastbaren Meßkolben aufweist.

Eine solche Belastungseinrichtung ist als Kraftnormal-Meßeinrichtung oder als Kraftkontroll-Meßeinrichtung einsetzbar.

Da die genannten Einrichtungen sich nur hinsichtlich ihres Ranges bei der Darstellung der physikalischen Meßgröße "Kraft" unterscheiden, wird im folgenden zur Vereinfachung durchweg der Begriff Belastungseinrichtung verwendet. Derartige Belastungseinrichtungen bestehen aus einer Direktbelastungsmaschine mit Belastungsgewichten, die aus wirtschaftlichen Gründen separat benutzt werden kann, die aber zum alternativen Betrieb mit hydraulischer Übersetzung ein hydraulisches Meßsystem aufweist, das dann durch die Belastungsgewichte belastet wird.

Mit Belastungseinrichtungen werden Kräfte erzeugt, die zur Kalibrierung von Kraft-Meßgeräten dienen. Während kleinere Kräfte noch unmittelbar durch Belastungsgewichte dargestellt werden können (Prinzip der Direktbelastung), kommt aus technischen und wirtschaftlichen Erwägungen für größere Kräfte, z. B. für Kräfte größer als 1 MN, nur eine Krafterzeugung durch hydraulische Übersetzung in Betracht.

Hierbei wird das angestrebte Kraft-Übersetzungsverhältnis zunächst angenähert durch das Verhältnis der Kolbenstirnflächen von Arbeitsseite und Meßseite.

Ein zweiter Näherungsschritt berücksichtigt Abweichungen zwischen Kraft-Übersetzungsverhältnis und Flächenverhältnis, die sich daraus ergeben, daß beide Kolben-Zylinder-Systeme zur Vermeidung von Reibung ungedichtet sind. Statt dessen werden jeweils Kolben und Zylinder durch eine Leckströmung getrennt, längs der der Öldruck vom Arbeitsdruck auf 0 abfällt. Aus diesem Grund enthalten die wirksamen Querschnitte zusätzlich zu den Kolbenflächen weitere Anteile, die durch die Gestalt der Dichtspalte gegeben sind und mit Hilfe eines numerischen Verfahrens entsprechend dem Stand der Technik ermittelt werden. Hier werden auch Abweichungen der Kolben- und Zylindermantelflächen von der exakten Zylindrizität berücksichtigt. Zur Realisierung eines gewünschten Kraft-Übersetzungsverhältnisses wird zunächst das Arbeitssystem gefertigt. Nach dessen genauer Vermessung hinsichtlich Kolbenstirnfläche und Dichtspalt-Geometrie (axial und azimutal) werden die Abmessungen des in der Regel erheblich kleineren und preisgünstiger zu fertigenden Meß-Systems festgelegt.

Selbst nach maßgenauer Fertigung des Meß-Systems verbleiben Abweichungen des tatsächlichen Kraft-Übersetzungsverhältnisses vom gewünschten Verhältnis, die derzeit nicht wirksam beseitigt werden können. Hierzu tragen Druckabfälle in den Rohrleitungen, verursacht durch die Lecköströmung, druckabhängige Änderungen der Dichtspalt-Geometrie, Einflüsse der Druckregelung, Temperatureinflüsse, etc. bei. Gemeinsam ist all diesen Einflüssen, daß sie nicht mit einer einzigen Maßnahme beseitigt werden können, sondern daß für jede Kraftstufe, die mit der Belastungseinrichtung sowohl im Direktbelastungs- als auch im Übersetzungsteil realisiert werden soll, eine separate und individuelle Korrektur notwendig ist. Insbesondere ist eine Anpassung mit Hilfsabgleichgewichten, die den Belastungsgewichten angefügt werden, nicht zulässig, da zwar auf der Übersetzungsseite die vorgegebenen Kraftstufen hinreichend genau erreicht werden können, nicht mehr aber in der Direktbelastungseinrichtung, wenn diese nicht im Übersetzungsbetrieb arbeitet.

Durch die DE-PS 31 38 170 ist eine gattungsgemäße Belastungseinrichtung für eine Kraftnormalmaschine bekannt, bei welcher der Arbeitskolben an seiner vom Meß-Ausgangsdruck beaufschlagten Stirnseite einen im Durchmesser wesentlich kleineren, leicht ausbaubaren Abgleichzapfen zur Feinabstimmung der Wirkfläche des Arbeitskolbens trägt. Durch den Abgleichzapfen bleibt nur eine Ringfläche des Arbeitskolbens druckwirksam, die an Größe entsprechend dem gewünschten Übersetzungsverhältnis bemessen wird, wobei dort erforderliche Nachbearbeitungen nur noch an dem verhältnismäßig kleinen Abgleichzapfen vorgenommen werden müssen.

Dieses Verfahren löst das Problem der Einstellung der geforderten Kraft-Übersetzungsverhältnisse kostengünstig, wenn ein Meß-System mit mehreren Arbeitssystemen betrieben werden soll. Eine Korrektur der genannten Abweichungen, die druck- und damit kraftstufenabhängig sind, ist mit diesem Verfahren nur für eine einzige Kraftstufe möglich.

Der Erfindung liegt die Aufgabe zugrunde, die relative Meßunsicherheit bei der Krafterzeugung durch hydraulische Übersetzung bei gattungsgemäßen Belastungseinrichtungen zu verringern.

Zur Lösung dieser Aufgabe ist vorgesehen, daß die Belastungseinrichtung mit einer Korrektureinrichtung für ihre systemeigenen Kraft-Übersetzungsfehler ausgerüstet ist, welche mehrere Hebel umfaßt, die jeweils ein Verstellgewicht tragen und über eine Kraftwirkungslinie, die in der Kraftachse der Meßseite liegt, mit dem Meßkolben in Verbindung stehen, und daß durch Verstellen der Gewichte längs ihrer Hebel die Zusatzbelastung des Meßkolbens entsprechend den bei den einzelnen Kraftstufen unterschiedlichen systemeigenen Kraft-Übersetzungsfehlern positiv oder negativ variierbar ist.

Für den Einsatz der Korrektureinrichtung werden zunächst die bei einer hergestellten Belastungseinrichtung noch vorliegenden Abweichungen im Kraft-Übersetzungsverhältnis über den gesamten Arbeitsbereich der Belastungseinrichtung auf der Arbeitsseite hinweg gemessen und die zur Fehlerkompensation erforderliche positive oder negative Zusatzbelastung auf der Direktbelastungsseite errechnet. Dabei zeigt sich, daß über den gesamten Meßbereich hinweg Zusatzbelastungen zwischen der Gewichtskraft von einigen Gramm und einigen Kilogramm erforderlich sein können. Bei der Erfindung werden diese Zusatzbelastungen nicht durch diskrete Gewichte oder Gewichtssätze realisiert, sondern durch wenige, auf Korrekturhebeln bewegbare Verstellgewichte erzeugt, was im Verhältnis zu den im allgemeinen einige Millionen DM teuren Belastungseinrichtungen mit geringem Aufwand realisierbar ist. Die Erfindung bietet noch den besonderen Vorteil, daß sie auch eine nachträgliche Ausrüstung einer Belastungseinrichtung mit einer Korrektureinrichtung ermöglicht, so daß auch bei bestehenden Maschinen mit verhältnismäßig geringem Aufwand eine relative Meßunsicherheit von kleiner als $+/- 1 \times 10^{-4}$ erreicht werden kann. Bei Neuanlagen erlaubt die Korrektureinrichtung in einer Belastungseinrichtung nach der Erfindung eine Senkung des Herstellaufwandes bei der Anpassung der Wirkflächen auf das verlangte Kraft-Übersetzungsverhältnis.

In Weiterbildung der Erfindung kann vorgesehen werden, daß die bei den jeweiligen Kraftstufen erforderlichen Zusatzbelastungen in einem die Gesamtanlage steuernden Rechnersystem gespeichert sind, welches mittels elektrischer Verstellantriebe die Verstellgewichte automatisch auf die verlangte Einstellung steuert.

Einer Weiterbildung der Erfindung zufolge ist für die Ausbildung der den Meßdruck liefernden Meßseite eine Direktbelastungsmaschine verwendet, wobei die Korrektureinrichtung in einem solchen Abstand angeordnet wird, daß die Meßseite nach Lösen ihrer Kraftverbindung zur Korrektureinrichtung und Trennen von der hydraulischen Kraftübersetzung weider für sich als übliche Direktbelastungsmaschine verwendet werden kann.

Weitere Merkmale der Erfindung sind in den Unteransprüchen angegeben.

Die Erfindung wird im folgenden anhand der Zeichnung näher erläutert.

Fig. 1    zeigt eine Belastungseinrichtung nach der Erfindung,

Fig. 2    zeigt für zwei Anlagen A und B die relative Abweichung der erzeugten Arbeitskraft, soweit die Abweichung durch Aufweitungen der Zylinder, Druckabfall in den Leitungen und ähnliches bedingt ist,

Fig. 3    zeigt für die Anlagen A und B die relative Abweichung der erzeugten Arbeitskraft, bedingt durch Reibung und anderes,

Fig. 4    veranschaulicht die Fehlerkorrektur für die Fehlerkurve A1 in Fig. 2,

Fig. 5    veranschaulicht die Fehlerkorrektur für die Fehlerkurve B1 in Fig. 2,

Fig. 6    veranschaulicht die Fehlerkorrektur für die Fehlerkurve A2 in Fig. 3 und

Fig. 7    veranschaulicht die Fehlerkorrektur für die Fehlerkurve B2 in Fig. 3.

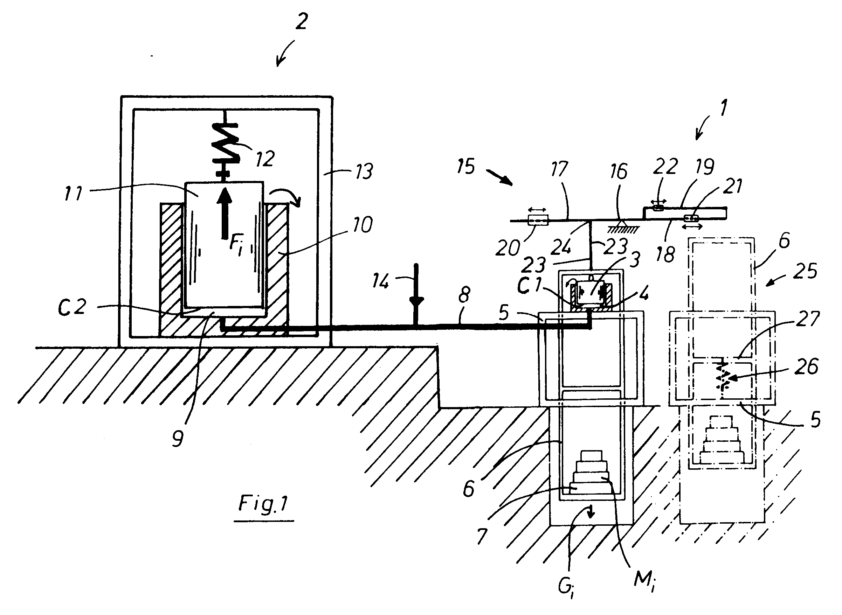

Die Belastungseinrichtung nach Fig. 1 besteht aus einer Meßseite 1 und einer Arbeitsseite 2. Die Meßseite 1 besitzt einen Meßkolben 3, der in einem Zylinder 4, im allgemeinen rotierend, aufgenommen ist, welcher oben auf einem Gerüst 5 aufsitzt. Der Meßkolben 3 ist an seiner oberen Stirnseite durch ein rahmenförmiges Belastungsgehänge 6 mit Belastungsgewichten 7 belastet. Der im Druckraum des Zylinders 4 sich entsprechend ergebende Meßdruck wird über die hydraulische Leitung 8 in den Druckraum 9 eines Arbeitszylinders 10 der Arbeitsseite 2 zugeführt und wirkt dort auf die untere Stirnseite eines Arbeitskolbens 11 ein. Der Arbeitskolben 11 wirkt auf ein schematisch dargestelltes, zu kalibrierendes Kraftmeßgerät 12, das zwischen der oberen Stirnseite des Kolbens 11 und dem oberen Querholm eines Rahmens 13 eingespannt ist.

Auch der Arbeitskolben 11 ist rotierend gelagert und mit einem nicht gezeigten Drehantrieb versehen. Leckverluste der Kolben 3 und 11, die in der Zeichnung jeweils durch einen gebogenen Pfeil angedeutet sind, werden durch eine Lecköolnachregulierung über die Leitung 14 ständig ausgeglichen.

Oberhalb der Meßseite 1 ist eine Korrektureinrichtung 15 angeordnet, die drei, um dieselbe Achse 16 schwenkbare Hebel 17, 18, 19 aufweist. Alle Hebel 17, 18, 19 tragen jeweils ein Verstellgewicht 20, 21, 22 und stehen über eine Kraftwirkungslinie 23, die in der Kraftachse der Meßseite 1 liegt, mit dem Meßkolben in Verbindung. Der Hebel 17 ist hierbei als einarmiger Hebel ausgeführt und bildet einen Tarierhebel 17 mit Tariergewicht 20 zur Tarierung des Belastungsgehänges 6. Die beiden anderen Hebel 18 und 19 sind als Doppelhebel ausgebildet, und ihre Gewichte 21, 22 liegen auf der der Kraftverbindungslinie 23 abgewandten Seite des Drehlagers 16. Die Hebel 18, 19 wirken somit kräftemäßig dem Tarierhebel 17 entgegen, so daß die von den Gewichten 21 und 22 auf den Meßkolben 3 ausgeübten Kräfte durch den Tarierhebel 17 kompensiert werden können.

Wegen der gemeinsamen Drehachse 16 und der gemeinsamen Anlenkstelle 24 an die Kraftverbindungslinie 23 können die Hebel 17, 18, 19 auch als ein starrer Waagebalken ausgebildet sein, an dem die Gewichte 20, 21, 22 unabhängig voneinander verstellbar sind. Der in Fig. 1 rechte Waagebalken wäre hierbei gegabelt und auf jedem Gabelzweig trüge er eines der Gewichte 21 bzw. 22.

In Fig. 1 ist rechts in strichpunktierten Linien noch veranschaulicht, daß für den Aufbau der Meßseite 1 von einer Direktbelastungsmaschine 25 ausgegangen worden ist, bei der ein zu kalibrierendes Kraftmeßgerät 26 unmittelbar zwischen einem Querholm 27 des Belastungsgehänges 6 und einem Querholm des Rahmens 5 eingespannt wird. Nach Lösen der Kraftverbindungslinie 23 kann die Meßseite 1 nach nur geringen Umrüstarbeiten jederzeit wieder als Direktbelastungsmaschine benutzt werden, was angesichts der hohen Kosten solcher Anlagen von erheblicher wirtschaftlicher Bedeutung ist.

Bei der Belastungseinrichtung nach Fig. 1 wirkt auf der Arbeitsseite die Kraft $F_i$, die sich aus der mit dem Kraft-Übersetzungsverhältnis Ü vervielfachten Gewichtskraft $G_i$ ergibt, auf das Kraftmeßgerät 12 und verursacht dort eine mechanische Verformung. Die Zuordnung von Kraft und Verformung entspricht der Kalibrierung des Kraftmeßgerätes.

Wichtig ist, daß das Kraft-Übersetzungsverhältnis einen vorgegebenen Wert hat, da sowohl die Gewichtskräfte $G_i$ feste und in vorgegebener Reihenfolge definierte Werte einnehmen müssen als auch die hydraulisch übersetzten Kräfte $F_i$. Das erfordert aber, daß die wirksamen Flächen beider Kolben-Zylindersysteme ebenfalls festgelegte Werte aufweisen müssen. Aus technischen Gründen werden die Flächen so ausgelegt, daß sich bei Nennkraft ein maximaler Druck von ca. 250 bar ergibt. In der Praxis bedeutet dies, daß zunächst ein Kolben-Zylindersystem, in der Regel das System 10, 11 der Arbeitsseite, berechnet, gefertigt und vermessen wird, und man daraus die wirksame Fläche C2 bestimmt. Erst danach wird der geforderte Wert der Meßseite bestimmt und versucht, diesen Wert auch praktisch als Wirkfläche C1 zu erreichen. Dies funktioniert nur mit einer begrenzten Meßunsicherheit, so daß sich beim Kraft-Übersetzungsverhältnis systematische Fehler einstellen.

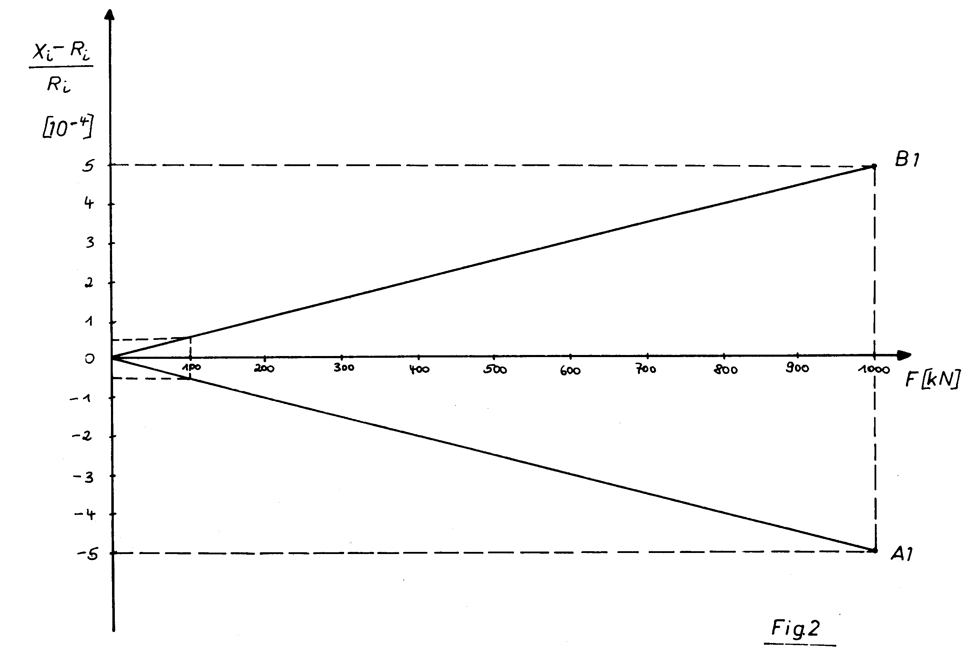

Zur Verringerung der Reibung in beiden Kolben-Zylindersystemen 3/4 und 10/11 werden, wie bereits erwähnt, ungedichtete Kolben-Zylindersysteme verwandt, die gegeneinander rotieren. Hierdurch geht ständig Lecköl verloren, das sehr präzise nachgeregelt werden muß, da andernfalls die Kolben absinken würden. Das Öl befindet sich nicht in einem statischen Zustand, sondern in ständiger Bewegung. Abhängig vom Druck finden daher in der Verbindungsleitung zwischen beiden Systemen schwer kalkulierbare, von der Leitungsdimensionierung und von der Lecködnachregelung abhängige, geringfügige Druckverluste statt, die zu einer Verfälschung der Krafterzeugung führen. Ebenso ruft der Öldruck in beiden Kolben-Zylindersystemen eine vom Druck, der Geometrie und verschiedenen anderen Parametern abhängige Verformung hervor, die ebenfalls eine Verfälschung der Kraft bewirkt, die zum Teil davon abhängt, ob mit steigender oder mit fallender Belastung gearbeitet wird (Hysterese). Auch lassen sich zeit- und druckabhängige Temperaturänderungen des Öls trotz Temperaturregelung nicht gänzlich vermeiden. Verschiedene Einflüsse sowie die genannten systematischen Fehler des Kraft-Übersetzungsverhältnisses führen daher zu einem vom Druck abhängigen systematischen relativen Fehler der Krafterzeugung, der sowohl positives als auch negatives Vorzeichen aufweisen kann. Dies ist in Fig. 2 verdeutlicht.

In Fig. 2 sind an zwei Beispielen A und B für hydraulisch erzeugte Kräfte bis 1MN mögliche relative Abweichungen der mit zwei verschiedenen hydraulischen Belastungseinrichtungen erzeugten Kräfte $x_i$ von den Soll-Kräften $R_i$, bezogen auf die Soll-Kräfte $R_i$, gezeigt. Wie durch die Kurven A1 und B1 veranschaulicht, können abhängig vom System die relativen Abweichungen sowohl positiv als auch negativ sein. Die Größenordnung der relativen Abweichungen von bis zu $+/- 5 \times 10^{-4}$ entspricht der Praxis entnommenen Werten, unabhängig von der Größe der hydraulisch erzeugten Nennkraft der jeweiligen Anlage. Das Verhalten aller bekannten Anlagen ist hierbei sehr ähnlich. Die Darstellung ist idealisiert, in Wirklichkeit sind es, infolge Überlappung der einzelnen systematischen Fehler, nicht unbedingt lineare Funktionen.

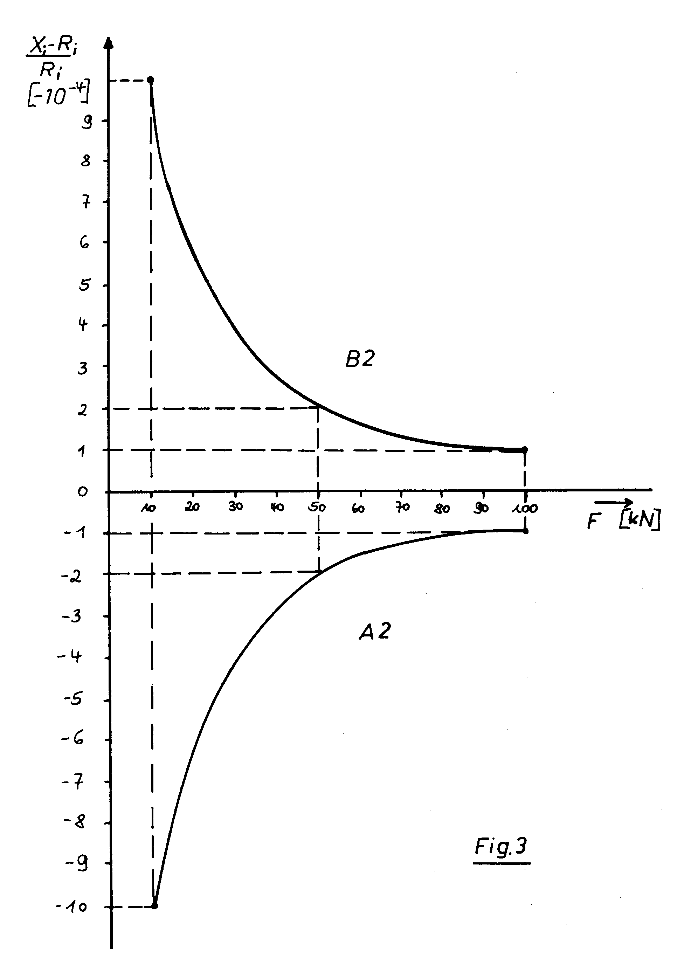

Im unteren Kraftbereich, d. h. bei Werten kleiner als ca. 10% der Nennkraft, treten weitere systematische Fehler bei der Krafterzeugung auf. Hauptsächlich handelt es sich um systembedingte Reibungseinflüsse, die von der Ölviskosität, von den Spaltweiten zwischen Kolben 3 bzw. 11 und Zylindern 4 bzw. 10 und einigen anderen geometrischen und physikalischen Größen abhängen. Dies wird an den beiden entgegengesetzten Beispielen A und B in Fig. 3 aufgezeigt.

Dargestellt sind in Fig. 3 wieder die relativen Abweichungen der erzeugten Kräfte $x_i$ von den Soll-Kräften $R_i$, bezogen auf die Soll-Kräfte $R_i$. Der aufgeführte Kraftbereich geht bis 100 kN, das entspricht 10% einer Nennkraft von 1 MN. Wie aus den Kurven A2 und B2 ersichtlich, können die Abweichungen ebenfalls sowohl positiv als negativ sein. Auch diese systematischen Fehler beeinträchtigen die Meßunsicherheiten von hydraulischen KN-ME sehr stark. Die Kurven sind idealisiert, in der Praxis sehen sie allerdings sehr ähnlich aus.

4

Die Fehler gemäß den Kurven A1, B1, A2 und B2 können mittels der Korrektureinrichtung 15 korrigiert werden. Durch Ändern der Lage der Verstellgewichte 20, 21, 22 tritt gleichzeitig eine zusätzliche oder eine vermindernde Kraft $H_i$ der auf das Kolben-Zylindersystem wirkenden Gewichtskraft $G_i$ ein. Die auf der Arbeitsseite durch hydraulische Übersetzung erzeugte Kraft $F_i$ ändert sich damit ebenfalls, und es gilt die Gleichung:

$$F_i = Ü \times (G_i + - H_i),$$

wobei Ü das Kraft-Übersetzungsverhältnis ist. Mit Hilfe der genannten drei Verstellgewichte, der Hebelwirkung und der Gleichung kann nun die auf der Arbeitsseite notwendige Korrektur der systematischen Fehler durchgeführt werden. Im folgenden werden die Hebel unterschieden in Tarierhebel 17, Korrekturhebel 18 und Reibungshebel 19. Analog sind die Verstellgewichte als Tariergewicht 20, Korrekturgewicht 21 und Reibungsgewicht 22 bezeichnet.

Die nachstehende Tabelle I zeigt an einem Berechnungsbeispiel einer hydraulisch übersetzten 1-MN-Belastungseinrichtung mit einer Direktbelastungsmaschine von 50 kN mehrere Kraft-Übersetzungsbeispiele. Ausgewählt wurden die Kraftstufen $F_i$ = 1 MN, 100 kN und 10 kN, die bei der Übersetzung von Ü = 20:1 durch die Gewichtskräfte $G_i$ auf der Meßseite von 50 kN, 5 kN und 500 N erzeugt werden. Die hierfür notwendigen Massen $m_i$ betragen ca. 5000 kg, 500 kg und 50 kg.

### Tabelle I

| $F_i$ | | $G_i$ | | $M_i$ |
|---|---|---|---|---|
| 1 MN Arbeitsseite | ≙ | 50 kN Meßseite | ~ | 5000 kg |
| 100 kN Arbeitsseite | ≙ | 5 kN Meßseite | ~ | 500 kg |
| 10 kN Arbeitsseite | ≙ | 500 N Meßseite | ~ | 50 kg |

Tabelle II zeigt für die drei Kraftstufen nach Tabelle I die Abweichungen

$$( \frac{X_i - R_i}{R_i} \times F_i )$$

sowohl für die Kurven A1 als auch B1 aus Fig. 2, ausgedrückt durch entsprechende Korrekturmassen.

### Tabelle II

**A) Zur Kurve A1 (Anlage zu leicht)**

| Abweichung auf Arbeitsseite $\left[\frac{X_i - R_i}{R_i} \times F_i\right]$ | Übersetzung 20:1 | Korrektur gewählt, entsprechend einer Masse von |
|---|---|---|
| $-5 \times 10^{-4}$ bei 1 MN = - 500 N | -25 N | Meßseite fehlen ~ 2,5 kg |
| $-5 \times 10^{-5}$ bei 100 kN = - 5 N | - 0,25 N | Meßseite fehlen ~ 25 g |
| $-5 \times 10^{-6}$ bei 10 kN = - 0,05N | - 0,0025 N | Meßseite fehlen ~ 250 mg |

**B) Zur Kurve B1 (Anlage zu schwer)**

| | | |
|---|---|---|
| $5 \times 10^{-4}$ bei 1 MN = 500 N | 25 N | Meßseite zuviel ~ 2,5 kg |
| $5 \times 10^{-5}$ bei 100 kN = 5 N | 0,25 N | Meßseite zuviel ~ 25 g |
| $5 \times 10^{-6}$ bei 10 kN = 0,05N | 0,0025 N | Meßseite zuviel ~ 250 mg |

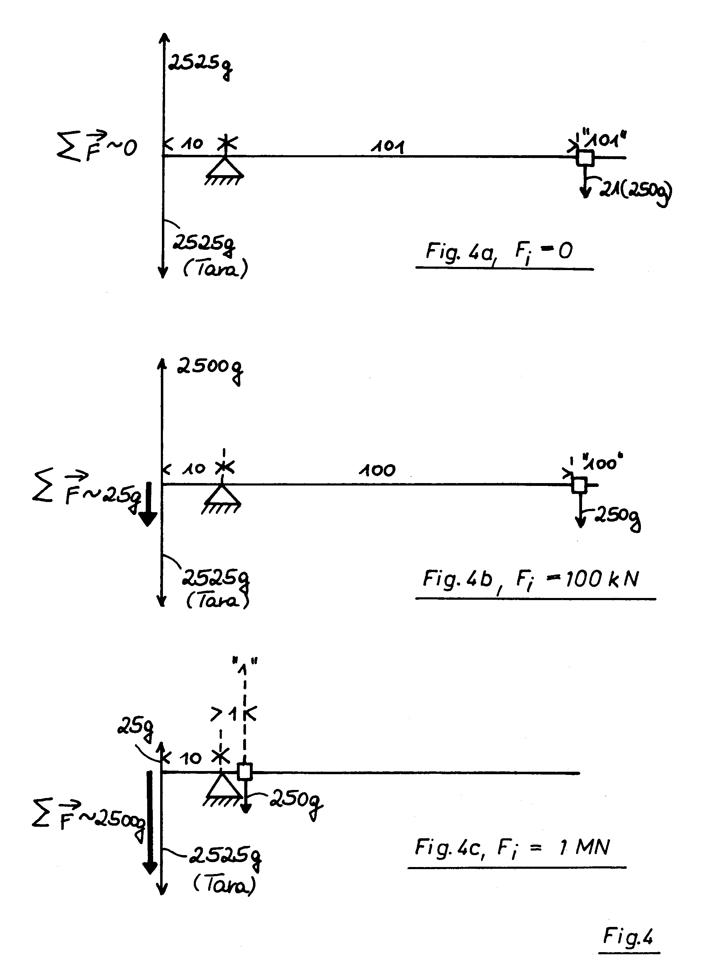

Fig. 4 zeigt die Durchführung der Korrekturen am Beispiel A1, wo die Krafterzeugung zu niedrig ist. Im Tarazustand, d.h. bei $F_i$ = 0 kN, muß sich dann das elektrisch verstellbare Korrekturgewicht 21 des Korrekturhebels 18, dessen Masse hier mit 250 g angenommen ist, in der Stellung "101" befinden, vgl. Fig. 4a. Die Übersetzung des Korrekturhebels 18 beträgt 101:10. Der in Fig.1 dargestellte Tarierhebel 17 muß hierfür mit seiner ebenfalls verstellbaren Tariergewicht 20 einen Tarawert gleich einem von ca. 2525 g bewirkten Gewicht ausgleichen. Zur Vereinfachung der Skizze ist der Tarierhebel 17 in den Fig. 4 bis 7 nicht mitgezeichnet, sondern nur der hierdurch eingestellte Tarawert als Vektor gezeichnet. Bei der Kraftstufe $F_i$ = 100 kN wird das Korrekturgewicht 21 des Korrekturhebels 18 elektrisch in die Stellung "100" gefahren, vgl. Fig. 4b. Die Übersetzung ist 100:10, und die hierdurch zusätzlich hervorgerufene Gewichtskraft, ausgedrückt durch die Masse, beträgt -2500 g plus dem nicht mehr veränderten Tarawert von 2525 g, also gleich 25 g. Dies entspricht aber genau der geforderten notwendigen Korrektur von 5 x $10^{-5}$ bei 100 kN nach Tabelle II. Für die Kraftstufe 1 MN muß das Verstellgewicht des Korrekturhebels 18 in die Stellung "1" gefahren werden, vgl. Fig. 4c. Bei einer Übersetzung von 1:10 ergibt sich bei gleichem Tarawert von 2525 g eine auf das Kolben-Zylindersystem 3/4 wirkende zusätzliche Gewichtskraft, ausgedrückt durch die Masse von 2525 g - 25 g = 2500 g. Dies entspricht der geforderten Korrektur bei der Kraftstufe 1 MN.

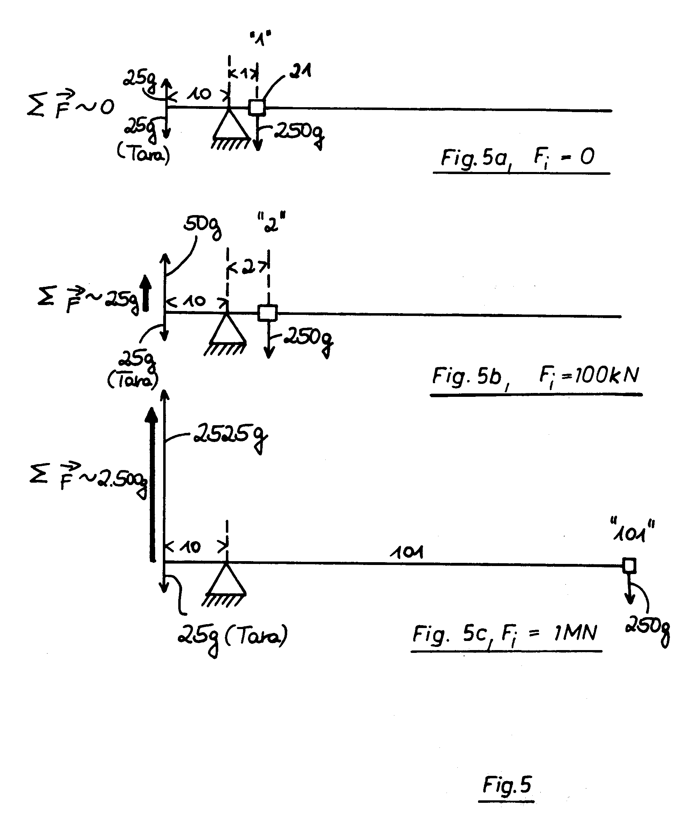

In Fig. 5 ist die Korrektur im umgekehrten Fall gemäß Beispiel B1 dargestellt, d. h. die Krafterzeugung einer hydraulisch übersetzten Anlage ist zu groß, und die zu große Gewichtskraft muß durch das Korrekturgewicht 21 reduziert werden. Für die Kraftstufe 0 kN wird der Tarawert dann bei der Stellung "1" durch das Tariergewicht 20 ausgeglichen, vgl. Fig. 5a. Für die Kraftstufen $F_i$ = 100 kN bewirkt das Korrekturgewicht 21 in der Stellung "2" und für $F_i$ = 1 MN in der Stellung "101" die erforderliche Korrektur. Das Tariergewicht darf natürlich nach der Tarierung nicht mehr verändert werden.

Eine Korrektur bei Kräften kleiner als 100 kN ist für den Fall A1 und B1 nicht mehr notwendig, da die relativen Abweichungen in beiden Fällen +/- 5 x $10^{-5}$ betragen. Dies entspricht aber den normalerweise maximal zulässigen relativen Meßunsicherheiten. Für die Kraftstufen zwischen 100 kN und 1 MN ergeben sich die Einstellungen des Korrekturgewichtes zwischen den Stellungen "1" und "101".

In der nachstehenden Tabelle III sind für die jeweils drei Kraftstufen 10 kN, 50 kN und 100 kN die nach Fig. 3 erforderlichen Massen der Ausgleichsgewichts (Reibungsgewichts) aufgeführt.

## Tabelle III

**A) Zur Kurve A2 in Fig. 3 (Anlage zu leicht)**

| Abweichung auf Arbeitsseite $\left[\dfrac{x_i - R_i}{R_i} \times F_i\right]$ | Übersetzung 20 : 1 | Ausgleichs... *gewichte, entsprechend einer Masse von* |
|---|---|---|
| -10 x $10^{-4}$ bei 10 kN = -10 N | -0,5 N | Meßseite fehlen ∼ 50 g |
| - 2 x $10^{-4}$ bei 50 kN = -10 N | -0,5 N | Meßseite fehlen ∼ 50 g |
| - 1 x $10^{-4}$ bei 100 kN = -10 N | -0,5 N | Meßseite fehlen ∼ 50 g |

**B) Zur Kurve B2 in Fig. 3 (Anlage zu schwer)**

| | | |
|---|---|---|
| 10 x $10^{-4}$ bei 10 kN = 10 N | 0,5 N | Meßseite zuviel ∼ 50 g |
| 2 x $10^{-4}$ bei 50 kN = 10 N | 0,5 N | Meßseite zuviel ∼ 50 g |
| 1 x $10^{-4}$ bei 100 kN = 10 N | 0,5 N | Meßseite zuviel ∼ 50 g |

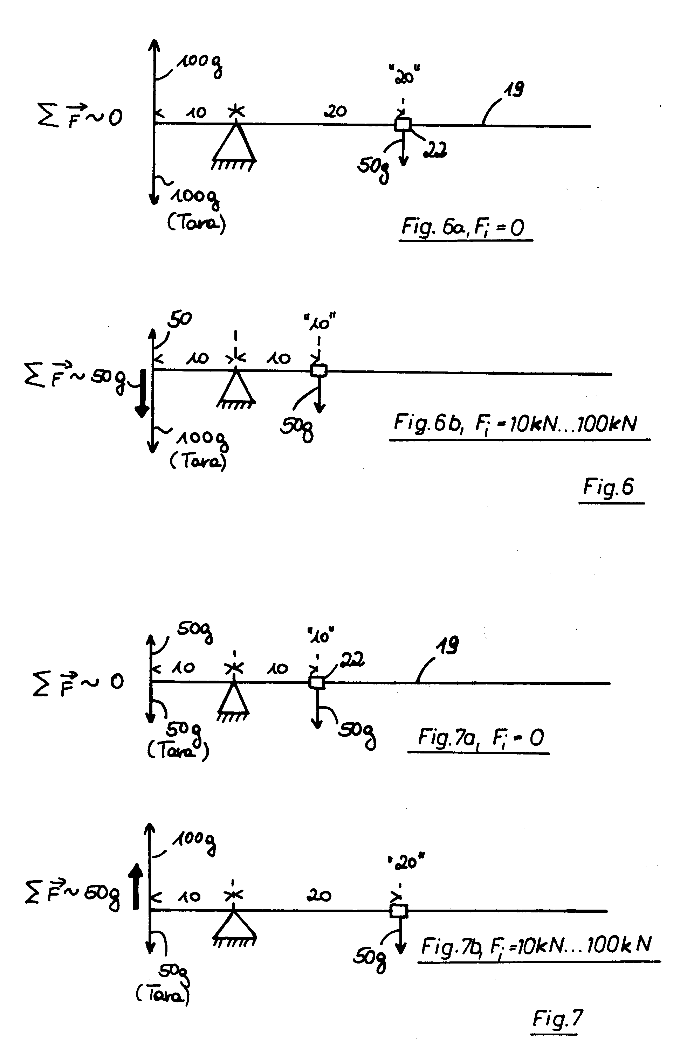

Zur Korrektur des Reibungseinflusses gemäß Fig. 3 wird der Reibungshebel 19 mit dem Reibungsgewicht 22 nach Fig. 1 verwendet, der unabhängig vom Korrekturhebel 18 ist. Die Bedeutung wird in den Fig. 6 und 7 an den in Tabelle III dargestellten, aus der Praxis entnommenen Zahlenbeispielen näher erläutert. Zunächst wird der Fall A2 betrachtet, d. h., hervorgerufen durch Reibung ist die Krafterzeugung der Anlage zu klein.

Der Reibungshebel 19 mit seinem Reibungsgewicht 22 muß die fehlende zusätzliche Gewichtskraft erzeugen. Das Zahlenbeispiel nach Tabelle III zeigt, daß auf der Meßseite unabhängig von der Kraftstufe das Gewicht von einer Masse von etwa 50 g fehlt. Dieses zusätzlichen Gewicht darf allerdings nicht bei der Kraftstufe $F_i$ = 0 kN wirken. Zur Realisierung wird ein Reibungsgewicht der Masse von 50 g am Reibungshebel 19 bei der Kraftstufe $F_i$ = 0 kN in die Stellung "20" gefahren, vgl. Fig. 6a. Bei einer

6

Reibungshebelübersetzung von 20:10 ergibt sich hierdurch eine der Gewichtskraft entgegengesetzte Kraft, entsprechend einer Massewirkung von -100 g. Der Tarierhebel 17 mit dem entsprechenden Tariergewicht, der zum Ausgleich des Korrekturgewichtes 21, beim Beispiel A, bereits eine Kraft entsprechend einer Massewirkung von -2525 g aufzubringen hat, muß diesen Wert zusätzlich ausgleichen, damit keinerlei Gewichtskräfte, weder positive noch negative, bei der Kraftstufe $F_i$ = 0 kN wirken.

Für die Erzeugung der Kraftstufen zwischen 10 kN und 100 kN muß das Reibungsgewicht 22 des Reibungshebels 19 elektrisch in die Stellung "10" gefahren werden, vgl. Fig. 6b. Bei einer Übersetzung von 10:10 ergibt sich damit nur noch eine der Gewichtskraft entgegengesetzte Kraft entsprechend einer Massewirkung von -50 g. Da gleichzeitig der Tarierhebel 17 den bei der Kraftstufe $F_i$ = 0 kN ermittelten, einer Massewirkung von 100 g entsprechenden Kraftwert erzeugt, der bei den verschiedenen Kraftstufen größer als 0 kN nicht mehr verändert werden darf, ergibt sich für alle Kraftstufen eine zusätzliche Gewichtskraft entsprechend einer Massewirkung von 100 g - 50 g = 50 g. Damit sind alle Forderungen für den Fall A2 erfüllt.

Für das Beispiel B, eine hydraulische Anlage, die zu große Kräfte erzeugt, wird zur Korrektur hinsichtlich der Fehlerkurve B2 beim Tarazustand, d. h. bei $F_i$ = 0 kN, das Reibungsgewicht 22 von einer Masse von 50 g in die Stellung "10" gefahren, vgl. Fig. 7a. Der Tarierhebel 17 muß dann so eingestellt werden, daß er bei einer Übersetzung des Reibungshebels 19 von 10:10 das Gewicht von 50 g ausgleicht. Für die Erzeugung von Kräften ab 10 kN muß das Reibungsgewicht 22 in die Stellung "20" gebracht werden, ohne daß der Tarawert verändert wird, siehe Fig. 7b. Hierdurch wird insgesamt eine der jeweiligen Gewichtskraft entgegengesetzte Kraft entsprechend einer Massewirkung von 50 g - 100 g = - 50 g hervorgerufen. Dies entspricht der geforderten Korrektur zur Reduzierung der Gewichtskraft für die Fehlerkurve B2. Sofern der Reibungseinfluß nicht konstant ist, müssen ggfs. analog zu den vorangegangenen Berechnungen mit dem Reibungsgewicht auch noch andere Stellungen des Reibungshebels angefahren werden.

Sowohl das Korrekturgewicht 21 als auch das Reibungsgewicht 22 können natürlich auch andere Werte annehmen als im Zahlenbeispiel angegeben. Die Einstellungen von Korrektur- und Reibungshebel 18, 19 müssen dann entsprechend angepaßt werden.

Mit dem beschriebenen System können die an hydraulisch übersetzten Belastungseinrichtungen erzeugten Kräfte und deren systematischen Fehler korrigiert werden. Wesentlich hierbei sind der Korrekturhebel, das Korrekturgewicht, der Reibungshebel, das Reibungsgewicht sowie der beiden Systemen angehörige Tarierhebel mit dem Tariergewicht. Korrektur- und Reibungshebel sind unabhängig voneinander. Die entsprechenden Gewichte müssen im allgemeinen auch unabhängig voneinander eingestellt werden, da die durch sie zu behebenden systematischen Fehler verschiedene Ursachen haben. Gemeinsam ist beiden der Tarierhebel. Er muß mit seinem Tariergewicht systembedingt und additiv die Taraeinstellung sowohl für den Korrekturhebel als auch für den Reibungshebel vornehmen.

Die Einstellungen von Korrektur- und Reibungsgewicht sind abhängig von der gewählten Kraftstufe und teilweise davon abhängig, ob mit steigender oder mit fallender Belastung gefahren wird. Die entsprechenden Parameter werden sinnvollerweise in einem die gesamte Anlage steuernden Rechnersystem gespeichert, so daß die jeweiligen Einstellungen automatisch erfolgen.

## Patentansprüche

1. Belastungseinrichtung mit hydraulischer Kraftübersetzung, bei welcher ein in einem Arbeitszylinder (10) aufgenommener Arbeitskolben (11) an einer Stirnseite ($C_2$) vom Ausgangsdruck einer hydraulischen Meßseite (1) beaufschlagt wird, die einen durch abgestufte Belastungsgewichte (7) belastbaren Meßkolben (3) und eine Korrektureinrichtung (15) für ihre systemeigenen Übersetzungsfehler aufweist, dadurch gekennzeichnet, daß die Korrektureinrichtung mehrere Hebel (17, 18, 19) umfaßt, die jeweils ein Verstellgewicht (20, 21, 22) tragen und über eine Kraftwirkungslinie (23), die in der Kraftachse der Meßseite (1) liegt, mit dem Meßkolben (3) in Verbindung stehen, und daß durch Verstellen der Gewichte (20, 21, 22) längs ihrer Hebel (17, 18, 19) die Zusatzbelastung des Meßkolbens (3) entsprechend den bei den einzelnen Kraftstufen unterschiedlichen systemeigenen Kraft-Übersetzungsfehlern positiv oder negativ variierbar ist.

2. Belastungseinrichtung nach Anspruch 1, dadurch gekennzeichnet, daß ein Hebel als Tarierhebel (17) ausgebildet ist und ein Tariergewicht (20) trägt, dessen Kraftwirkung an der Kraftwirkungslinie (23) den von zwei anderen Hebeln (18, 19) mit ihren Verstellgewichten (21, 22) aufgebrachten Kräften entgegengesetzt gerichtet ist.

**3.** Belastungseinrichtung nach Anspruch 2, dadurch gekennzeichnet, daß eines (21) der beiden dem Tariergewicht (20) entgegenwirkenden Verstellgewichte (21, 22) um ein Mehrfaches größer ist als das andere Verstellgewicht (22), daß der wirksame Hebelarm des größeren Verstellgewichtes (21) um etwa einen Faktor 100 variierbar und der wirksame Hebelarm des kleineren Verstellgewichtes (22) um mindestens bis zum Faktor 2 variierbar ist.

**4.** Belastungseinrichtung nach einem der Ansprüche 2 oder 3, dadurch gekennzeichnet, daß der Tarierhebel (17) als einarmiger Hebel und die beiden anderen Hebel (18, 19) als Doppelhebel gelagert sind.

**5.** Belastungseinrichtung nach einem der Ansprüche 1 bis 4, dadurch gekennzeichnet, daß alle Hebel (17, 18, 19) dieselbe Drehachse (16) besitzen.

**6.** Belastungseinrichtung nach einem der Ansprüche 1 bis 5, dadurch gekennzeichnet, daß die Hebel (17, 18, 19) einen starren Waagebalken bilden, dessen einer, mit dem Meßkolben (3) verbundener Arm den Tarierhebel (17) bildet und an dessen anderem Arm zwei Verstellgewichte (21, 22) unabhängig voneinander verschiebbar sind.

**7.** Belastungseinrichtung nach Anspruch 6, dadurch gekennzeichnet, daß der andere Arm gegabelt ist und auf jedem Gabelzweig (Hebel 18, 19) je eines der Verstellgewichte (21, 22) trägt.

**8.** Belastungseinrichtung nach einem der Ansprüche 1 bis 7, dadurch gekennzeichnet, daß für die Meßseite (1) eine Direktbelastungseinrichtung (25) mit rahmenförmigem Belastungsgehänge (6) verwendet ist und daß die Korrektureinrichtung (15) in einem solchen Abstand vom Belastungsgehänge (6) angeordnet ist, daß die Meßseite (1) nach Lösen der Kraftwirkungslinie (23) und Trennen von der hydraulischen Kraftübersetzung wieder als Direktbelastungseinrichtung verwendbar ist.

**9.** Belastungseinrichtung nach Anspruch 8, dadurch gekennzeichnet, daß die Korrektureinrichtung (15) oberhalb des Belastungsgehänges (6) angeordnet ist und über die Kraftwirkungslinie (23) an eine obere Querstrebe des Belastungsgehänges (6) angeschlossen ist.

**10.** Belastungseinrichtung nach einem der Ansprüche 1 bis 9, dadurch gekennzeichnet, daß die bei den jeweiligen Kraftstufen erforderlichen Zusatzbelastungen in einem die Gesamtanlage steuernden Rechnersystem gespeichert sind, welches mittels elektrischer Verstellantriebe die Verstellgewichte (20, 21, 22) automatisch auf die verlangte Einstellung steuert.

**Claims**

**1.** Loading measurement device with hydraulic force-transmission, in which one face (C2) of an operating piston (11) contained in an operating cylinder (10) is influenced by the output pressure of a hydraulic measuring section (1) which has a measuring piston (3) which can be loaded with graded loading weights (7) and a corrective device (15) for its inherent transmission errors, characterized in that the corrective device (15) is comprised of a number of levers (17,18,19) each carrying a moveable weight (20,21,22) and connected to the measuring piston (3) via a dynamic effect line (23) lying in the force axis of the measuring section (1) and in that by movement of the weights (20,21,22) along the length of their levers (17,18,19) the additional loading of the measuring piston (3) is variable positively or negatively to correspond to the various force-transmission errors inherent in the individual force levels.

**2.** Loading measurement device according to Claim 1, characterized in that one lever takes the form of a tare lever (17) and carries a tare weight (20) whose dynamic effect is directed, on the dynamic effect line (23), in opposition to the forces applied by the other two levers (18,19) with their adjustable weights (21,22).

**3.** Loading measurement device according to Claim 2, characterized in that one (21) of the two adjustable weights (21,22) working against the tare weight (20) is larger by a multiple than the other adjustable weight (22), in that the effective lever arm of the larger adjustable weight (21) is variable by a factor of around 100 and the effective lever arm of the smaller adjustable weight (22) is variable at least up to factor of 2.

**4.** Loading measurement device according to one of Claims 2 or 3, characterized in that the tare lever (17) is stored in the rest position as a single-armed lever and the two other levers (18,19) are stored as a double lever.

**5.** Loading measurement device according to one of Claims 1 to 4, characterized in that all levers (17,18,19) rotate on the same axis (16).

**6.** Loading measurement device according to one of Claims 1 to 5, characterized in that the levers (17,18,19) form a rigid balance-beam, one of whose arms, connected to the measuring piston (3) forms the tare lever (17) and along whose other arm two adjustable weights (21,22) are moveable independently of one another.

**7.** Loading measurement device according to Claim 6, characterized in that the other arm is forked and each branch of the fork (levers 18,19) carries one of the adjustable weights (21,22).

**8.** Loading measurement device according to one of Claims 1 to 7, characterized in that a direct-loading device (25) in the form of a suspended loading-frame (6) is used for the measuring section (1) and in that the corrective device (15) is located at a distance from the suspended loading-frame (6) such that the measuring section (1), after disconnection of the dynamic effect line (23) and separation from the hydraulic force-transmission is again usable as a direct-loading device.

**9.** Loading measurement device according to Claim 8, characterized in that the corrective device (15) is located above the suspended loading-frame (6) and is connected via the dynamic effect line (23) to an upper cross-strut of the suspended loading-frame (6).

**10.** Loading measurement device according to one of Claims 1 to 9, characterized in that the additional loads required by the various force levels are stored in a computer system controlling the entire apparatus, which automatically controls the adjustable weights (20,21,22) via electrical adjustment drives to produce the required adjustment.

**Revendications**

**1.** Dispositif de mise en charge, avec transmission hydraulique des efforts, dans lequel un piston de travail (11) logé dans un cylindre de travail (10) est sollicité sur une face frontale (C2) par la pression initiale d'un côté de mesure hydraulique (1), présentant un piston de mesure (3), susceptible d'être chargé par des poids de chargement (7) échelonnés et un dispositif de correction (15) destiné aux erreurs de transmission propres à son système, caractérisé en ce que le dispositif de correction comprend plusieurs leviers (17,18,19), portant chacun un poids de réglage (20,21,22) et reliés au piston de mesure (3) par l'intermédiaire d'une ligne d'action de force (23), située dans l'axe moteur de la face de mesure (1), et en ce que, par un déplacement de réglage des poids (20,21,22) le long de leurs leviers (17,18,19), la sollicitation supplémentaire du piston de mesure (3) peut être modifiée dans un sens positif ou négatif, en fonction des erreurs de transmission propres au système, différents avec les niveaux de forces.

**2.** Dispositif de mise en charge selon la revendication 1, caractérisé en ce qu un levier est réalisé sous forme d'un levier de tarage (17) et porte un poids de tarage (20), dont l'effet sur la ligne d'action de force (23) est orienté à l'opposé des forces appliquées par deux autres leviers (18,19), par leurs poids de réglage (21,22).

**3.** Dispositif de mise en charge selon la revendication 2, caractérisé en ce que l'un (21) des deux poids de réglage (21,22) antagoniste au poids de tarage (20) est plusieurs fois supérieur à l'autre poids de réglage (22), en ce que le bras de levier actif du plus lourd poids de réglage (21) est modifiable, d'à peu près un facteur 100; et le bras de levier actif du plus petit poids de réglage (22) est modifiable d'au moins jusqu'au facteur 2.

**4.** Dispositif de mise en charge selon l'une des revendications 2 ou 3, caractérisé en ce que le levier de tarage (17) est réalisé sous forme de levier à un bras et les deux autres leviers (18,19) étant montés à rotation comme des leviers doubles.

**5.** Dispositif de mise en charge selon l'une des revendications 1 à 4, caractérisé en ce que tous les leviers (17,18,19) ont le même axe de rotation (16).

**6.** Dispositif de mise en charge selon l'une des revendications 1 à 5, caractérisé en ce que les leviers (17,18,19) forment un fléau de balance rigide, dont un bras, relié au piston de mesure (3), forme le levier de tarage (17) et à l'autre bras duquel deux poids de réglage (21,22) sont déplaçables indépendamment l'un de l'autre.

**7.** Dispositif de mise en charge selon la revendication 6, caractérisé en ce que l'autre bras est fourchu et porte sur chaque branche de fourche (levier 18,19) l'un des poids de réglage (21,22).

**8.** Dispositif de mise en charge selon l'une des revendications 1 à 7, caractérisé en ce que, pour le côté de mesure (1), est utilisé un dispositif de mise en charge directe (25) à suspension de mise en charge (6) triangulé et en ce que le dispositif de correction (15) est disposé à une distance de la suspension de mise en charge (6) telle que la face de mesure (1), après relâchement de la ligne d'action de force (23) et séparation d'avec la transmission motrice hydraulique, est de nouveau réutilisable comme dispositif de mise en charge directe.

**9.** Dispositif de mise en charge selon la revendication 8, caractérisé en ce que le dispositif de correction (15) est disposé au-dessus de la suspension de mise en charge (6) et raccordé, par l'intermédiaire de la ligne d'action de force (23), à une entretoise transversale supérieure de la suspension de mise en charge (6).

**10.** Dispositif de mise en charge selon l'une des revendications 1 à 9, caractérisé en ce que les sollicitations supplémentaires, nécessitées lors des échelonnement respectifs de forces, sont stockées dans un système d'ordinateur commandant l'ensemble de l'installation, qui assure la commande automatique des poids de réglage (20,21,22) au réglage souhaité, au moyen de servo-entraînements électriques.

Fig.1

Fig.2

EP 0 403 677 B1

Fig.3

Fig. 4a,  $F_i = 0$

Fig. 4b,  $F_i = 100\,kN$

Fig. 4c,  $F_i = 1\,MN$

Fig. 4

Fig. 5

Fig. 6a, $F_i = 0$

Fig. 6b, $F_i = 10kN...100kN$

Fig. 6

Fig. 7a, $F_i = 0$

Fig. 7b, $F_i = 10kN...100kN$

Fig. 7